# EUROPÄISCHE PATENTSCHRIFT

(11) **EP 3 322 929 B1**
(45) Veröffentlichungstag und Bekanntmachung des Hinweises auf die Patenterteilung: **10.07.2019**
(21) Anmeldenummer: 16708390.6
(22) Anmeldetag: 03.03.2016
(51) Int. Cl.: F16L 47/20, F16L 47/12, F16L 13/11, B29C 45/14

(54) **KUPPLUNGSARMATUR FÜR ROHRLEITUNGEN**
COUPLING FITTING FOR PIPES
GARNITURE DE RACCORDEMENT POUR CONDUITES

(30) Priorität: 15.07.2015 DE 102015213223
(43) Veröffentlichungstag der Anmeldung: 23.05.2018
(73) Patentinhaber: ContiTech MGW GmbH, 34346 Hannoversch-Münden (DE)
(72) Erfinder: KUHLHOFF, Florian, 22457 Hamburg (DE); KASCHKA, Simon, 22848 Norderstedt (DE); ANTONIAK, Henry, 30827 Garbsen (DE)
(74) Vertreter: Finger, Karsten
(86) Internationale Anmeldenummer: PCT/EP2016/054500
(87) Internationale Veröffentlichungsnummer: WO 2017/008923

(56) Entgegenhaltungen:
- EP-A1- 0 768 490
- EP-A1- 1 534 490
- EP-A2- 0 531 709
- WO-A1-2005/022022

## Beschreibung

Die Erfindung betrifft eine Kupplungsarmatur, aufweisend eine Rohrleitung und eine Anschlussmuffe.

Kupplungsarmaturen sind seit langer Zeit bekannt und im Einsatz. Problematisch bei solchen Armaturen kann es sein, dass die Armatur, insbesondere bei Steckverbindungen, bestimmte Profile aufweisen muss, die am betreffenden Ende der Leitung angeformt oder anderweitig fluiddicht angebracht sein müssen. Insbesondere bei metallischen Rohrleitungen ist das Anlöten derartiger Kupplungsarmaturen gängige Praxis. Dies ist jedoch mit einigem Aufwand und dementsprechenden Kosten verbunden. Außerdem können durch die hohen beim Löten auftretenden Temperaturen angrenzende Bauteile unerwünscht beeinträchtigt werden.

Diese Problematik lässt sich umgehen, wenn Armaturen aus Kunststoff Verwendung finden, die beispielsweise verklebbar, aber auch durch einen Spritzvorgang in situ erzeugbar sind.

Die EP 053 1709 B1 zeigt eine derartige Armatur, die an das Ende einer Rohrleitung aus Kunststoff angespritzt ist. Dabei wird das gesamte Anschlussteil als Spritzguss erzeugt. Damit ist ein relativ großes Materialvolumen notwendig, was unter anderem zu erhöhten Abkühlzeiten führt. Die EP 1534490 B1 offenbart ebenfalls eine Armatur der eingangs geschilderten Art. In diesem Fall wird die Kunststoffrohrleitung mit einer ebenfalls aus Kunststoff bestehenden Anschlussmuffe, die auf das Rohr aufgesteckt ist, mittels eines Spritzgießvorganges mit einem Kunststoff stoffschlüssig verbunden.

Dieses Prinzip funktioniert jedoch nur bei Materialien, die bei den thermischen Verhältnissen beim Spritzgießen mit dem Spritzmaterial zumindest an den Oberflächen verschmelzen. Dies schränkt die Materialauswahl stark ein, beispielsweise ist es so nicht möglich, metallische Rohrleitungen einzusetzen. Auch ist auf eine äußerst genaue Prozessführung zu achten, da sonst die Gefahr von Undichtigkeiten besteht.

In der WO 2005/022022 A1 ist ebenfalls eine Kupplungsarmatur der eingangs geschilderten Art offenbart, bei der die Rohrleitung und die Muffe mittels Anschlägen in einer definierten Position zueinander zu liegen kommen und mit einem Verbindungsstück (retainer 28) in dieser Position fest zusammengefügt sind, wobei das Verbindungsstück aus Kunststoff sein und im Kunststoff-Spritzguss hergestellt sein kann.

Rohrleitung und Muffe der WO 2005/022022 A1 sind radial mit zwei O-Ring-Dichtungen abgedichtet. Beim Zusammenschieben der Rohrleitung und der Muffe bis zum Aufeinandertreffen der Anschläge muss die Muffe längs des gesamten Verschiebeweges über die O-Ringe gleiten, wobei diese beschädigt werden können, was zu Undichtigkeiten führen kann Ein weiteres Ausführungsbeispiel der WO 2005/022022 A1 zeigt eine Rohrleitung und eine Muffe, zwischen denen eine Dichtung angeordnet ist. Ein Verbindungsstück (retainer 326) wird im Verbindungsbereich über die Dichtung, die Muffe und die Rohrleitung im Spritzgussverfahren überspritzt.

Der Erfindung liegt die Aufgabe zu Grunde, eine Kupplungsarmatur der eingangs geschilderten Art derart weiterzubilden, dass die Dichtwirkung zwischen der Muffe und der Rohrleitung verstärkt ist.

Diese Aufgabe wird dadurch gelöst, dass die Armatur folgende Merkmale aufweist, nämlich
- eine vom Ende der Rohrleitung um ein vorbestimmtes Maß beabstandete radial nach außen weisende umlaufende Wulst,
- eine auf die Rohrleitung aufgeschobene Anschlussmuffe, deren 1. Ende im Bereich der Wulst der Rohrleitung angeordnet ist und einen 1. Innendurchmesser aufweist derart, dass zwischen dem äußeren Durchmesser der Wulst und dem 1. Innendurchmesser der Muffe ein Spalt vorhanden ist und deren 2. Ende einen 2. Innendurchmesser aufweist, der dem Innendurchmesser der Rohrleitung entspricht und der 1. Durchmesser in einem Übergangsbereich zwischen Wulst und Ende der Rohrleitung in den 2. Durchmesser übergeht, so dass die Muffe nur soweit auf das Ende der Rohrleitung aufgeschoben ist, bis das Ende der Rohrleitung nicht mehr weiter in den 2. Durchmesser der Muffe hineinpasst,
- eine elastische ringförmige Dichtung, die einerseits zwischen dem Ende der Rohrleitung und der Wulst, andererseits zwischen der aufgeschobenen Muffe und der Rohrleitung angeordnet ist,
- einen Verbindungsring, der in einem Bereich angeordnet ist, der axial derart bemessen ist, dass er das aufgeschobene 1. Ende der Muffe sowohl in Richtung auf das nicht aufgeschobene 2. Ende der Muffe als auch in entgegengesetzte Richtung um ein vorbestimmtes Maß überdeckt und in einem Kunststoffspritzvorgang erzeugt ist, wobei das Material des Verbindungsrings durch den Spritzdruck durch den Spalt bis zu der elastischen Dichtung vorgepresst ist und andererseits das Spritzmaterial in Richtung vom Rohrleitungsende wegweisend hinter der Wulst der Rohrleitung um die Rohrleitung herum gepresst ist, so dass ein nach innen bis zur Rohrleitung reichenden Absatz ausgebildet ist.

Auf diese Weise ist vermeidbar, dass die Rohrleitung aus der Armatur herausziehbar ist. Durch das gegen die elastische Dichtung vorgepresste Spritzmaterial ist die Dichtung axial gestaucht, sodass die Dichtwirkung zwischen der Muffe und der Rohrleitung noch verstärkt ist.

In einer Weiterbildung der Erfindung weist die aufgeschobene Muffe im Bereich des Verbindungsringes mindestens eine umlaufende Nut auf, in die das Material des Verbindungsringes eingreift. Die Verbindung des Verbindungsringes mit der Anschlussmuffe ist auf diese Weise durch einen formschlüssigen Anteil verstärkt.

In einer Weiterbildung der Erfindung weist die Kupplungsarmatur eine Halterung auf, die mindestens teilweise im Bereich des Verbindungsringes angeordnet ist, so dass mindestens ein Teil der Halterung in das Material des Verbindungsringes eingebettet ist.

Durch diese Anordnung ist eine Halterung zusammen mit dem Verbindungsring in einem Arbeitsgang mit der Rohrleitung herstellbar.

In einer Weiterbildung der Erfindung weist der in den Verbindungsring hineinragende Teil der Halterung mindestens ein durchgehendes Loch auf, welches mit dem Spritzmaterial gefüllt ist.

Diese Anordnung hat den Vorteil, dass die Halterung auch formschlüssig mit dem Verbindungsring verbindbar ist.

Die Erfindung betrifft weiterhin ein Verfahren zur Herstellung einer Kupplungsarmatur, aufweisend eine Rohrleitung und eine Anschlussmuffe.

Dabei lag die Aufgabe zu Grunde, die eingangs geschilderte Verbindung auf möglichst einfache Weise und möglichst geringem Materialeinsatz sicher und dicht herzustellen, wobei unerwünschte thermische Belastung der beteiligten und benachbarter Bauteile vermieden wird.

Diese Aufgabe wird dadurch gelöst, dass die Verbindung durch folgende Arbeitsschritte hergestellt wird, nämlich
- Erzeugen einer umlaufenden Wulst auf der Rohrleitung, wobei die Wulst vom Ende der Rohrleitung um ein vorbestimmtes Maß beabstandet ist,
- Aufschieben einer elastischen ringförmigen Dichtung auf das Ende der Rohrleitung derart, dass die Dichtung zwischen Wulst und Ende der Rohrleitung zu liegen kommt,
- Aufschieben einer Muffe auf das Ende der Rohrleitung derart, dass deren 1. Ende im Bereich der Wulst der Rohrleitung zu liegen kommt und einen 1. Innendurchmesser aufweist derart, dass zwischen dem äußeren Durchmesser der Wulst und dem 1. Innendurchmesser der Muffe ein Spalt gebildet wird und deren 2. Ende einen 2. Innendurchmesser aufweist, der dem Innendurchmesser der Rohrleitung entspricht und der 1. Durchmesser in einem Übergangsbereich zwischen Wulst und Ende der Rohrleitung in den 2. Durchmesser übergeht, so dass die Muffe nur soweit auf das Ende der Rohrleitung geschoben werden kann, bis das Ende der Rohrleitung nicht mehr weiter in den 2. Durchmesser der Muffe hineinpasst,
- Umspritzen des Verbundes aus Rohrleitungsende und Muffe zu einem Verbindungsring in einem Bereich, der axial derart bemessen ist, dass er das aufgeschobene 1. Ende der Muffe sowohl in Richtung auf das nicht aufgeschobene 2. Ende der Muffe als auch in entgegengesetzte Richtung um ein vorbestimmtes Maß überdeckt und in einem Kunststoffspritzvorgang erzeugt wird, wobei das Material des Verbindungsrings durch den Spritzdruck durch den Spalt bis zu der elastischen Dichtung gepresst wird und andererseits das Spritzmaterial in Richtung vom Rohrleitungsende wegweisend hinter der Wulst der Rohrleitung um die Rohrleitung herum gepresst wird, so dass ein nach innen bis zur Rohrleitung reichenden Absatz ausgebildet wird.

Auf diese Weise bildet sich hinter der Wulst der Rohrleitung ein nach innen weisender Absatz der Umspritzung, der verhindert, dass die Rohrleitung aus der Armatur herausziehbar ist. Durch das Einfließen des Spritzmaterials gegen die elastische Dichtung wird diese axial gestaucht, sodass die Dichtwirkung zwischen der Muffe und der Rohrleitung noch erhöht wird.

In einer Weiterbildung der Erfindung weist die aufgeschobene Muffe im Bereich der Umspritzung mindestens eine umlaufende Nut auf, in die das Spritzmaterial beim Spritzen hineinfließt.

Damit wird zwischen der Muffe und dem erstarrten Spritzmaterial ein Formschluss geschaffen, der die Sicherheit gegen Auseinanderziehen der Muffe gegen die Rohrleitung verbessert.

In einer Weiterbildung der Erfindung umfasst das Verfahren weiters den folgenden Schritt nämlich
- Anordnung einer Halterung im Bereich des zu umspritzenden Verbindungsringes derart, dass ein Teil der Haltung in den zu spritzenden Bereich hineinragt und diese Teil beim Spritzvorgang vom Spritzmaterial umspritzt wird.

Diese Anordnung hat den Vorteil, dass eine Halterung nicht separat angebracht werden muss.

In einer Weiterbildung der Erfindung weist der in den zu spritzenden Bereich hineinragende Teil der Halterung mindestens ein durchgehendes Loch auf, in welches das Spritzmaterial beim Spritzvorgang eindringt.

Auf diese Weise wird die Halterung auch formschlüssig mit dem Verbindungsring verbunden.

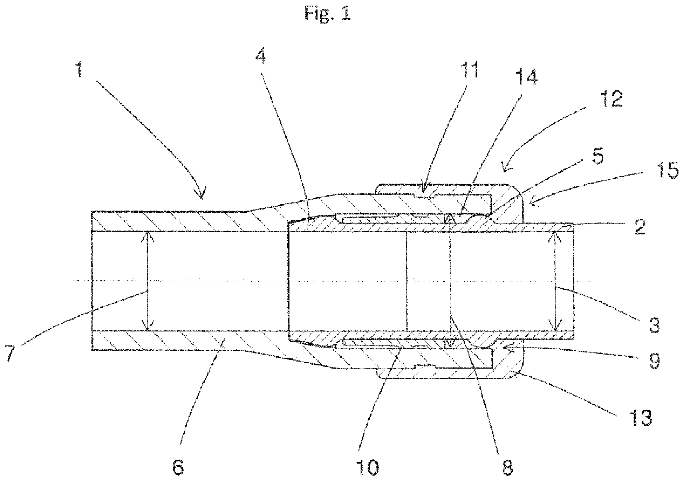

Anhand der Zeichnung wird nachstehend ein Ausführungsbeispiel der Erfindung näher erläutert. Die Figur 1 zeigt eine erfindungsgemäße Kupplungsarmatur 1 in einem Längsschnitt. Die Kupplung 1 weist eine Rohrleitung 2 mit einem Innendurchmesser 3 und eine Endkontur 4 und eine umlaufende Wulst 5 sowie eine Anschlussmuffe 6 mit einem 1. Innendurchmesser 7 und einem 2. Innendurchmesser 8 auf. Der Innendurchmesser 8 ist so bemessen, dass zwischen der umlaufenden Wulst 5 und der Rohrleitung 2 ein Spalt 9 besteht. Zwischen der Endkontur 4, der Wulst 5 und dem Innendurchmesser 8 der Muffe 6 ist eine elastische Ringdichtung 10 angeordnet, die die Rohrleitung 2 gegen die Muffe 6 abgedichtet.

Die Muffe 6 weist auf ihrem äußeren Umfang eine umlaufende Nut 11 auf. Im auf die Rohrleitung 2 über die Wulst 5 aufgeschobenen Endbereich 12 der Muffe 6 ist ein Verbindungsring 13 aus Kunststoffmaterial angespritzt, der den Endbereich 12 der Muffe 6 in axialer Richtung vollständig überdeckt. Das Kunststoffmaterial des Verbindungsringes 13 ist beim Spritzvorgang durch den Spalt 9 in einen Hohlraum 14 eingedrungen, wobei der Hohlraum 14 durch die elastische Dichtung 10, den Innendurchmesser 8 der Muffe 6 und die Rohrleitung 2 gebildet ist. Durch den Spritzdruck ist die Dichtung 10 etwas gestaucht, was eine Erhöhung des Anpressdrucks der Dichtung 10 und damit eine Verbesserung der Dichtigkeit bewirkt. Der Verbindungsring 13 umgreift außerdem den Außenumfang der Muffe 6, wobei das Material auch in die Nut 11 eingepresst ist. Der Verbindungsring 13 erstreckt sich außerdem derart um den Endbereich 12 der Muffe 6, dass er in Richtung der Rohrleitung 2 hinter dem Ende 12 der Muffe 6 einen Absatz 15 bildet, der bis auf die Rohrleitung 2 reicht, wobei auch die Wulst 5 mit umschlossen ist.

Der Verbindungsring 13 verhindert damit sowohl formschlüssig durch Eingreifen in die Nut 11 und hinter die Wulst 5 als auch durch Reibschluss zwischen Muffe 6 und Rohrleitung 2 die unbeabsichtigte Trennung von Muffe 6 und Rohrleitung 2.

### Bezugszeichenliste

### (Teil der Beschreibung)

- 1: Kupplungsarmatur
- 2: Rohrleitung
- 3: Innendurchmesser der Rohrleitung 2
- 4: Endkontur der Rohrleitung 2
- 5: umlaufende Wulst der Rohrleitung 2
- 6: Anschlussmuffe / Muffe
- 7: Erster Innendurchmesser der Muffe 6
- 8: Zweiter Innendurchmesser der Muffe 6
- 9: Spalt
- 10: elastische Ringdichtung / Dichtung
- 11: umlaufende Nut der Muffe 6
- 12: Endbereich der Muffe 6
- 13: Verbindungsring
- 14: Hohlraum
- 15: Absatz der Muffe 6

## Patentansprüche

1. Kupplungsarmatur (1), aufweisend eine Rohrleitung (2) und eine Anschlussmuffe (6), wobei die Kupplungsarmatur (1) folgende weitere Merkmale aufweist, nämlich
- eine vom Ende der Rohrleitung (2) um ein vorbestimmtes Maß beabstandete radial nach außen weisende umlaufende Wulst (5),
- ein 1. Ende der auf die Rohrleitung (2) aufgeschobenen Anschlussmuffe (6) im Bereich der Wulst (5) der Rohrleitung (2) angeordnet ist und einen 1. Innendurchmesser (8) aufweist derart, dass zwischen dem äußeren Durchmesser der Wulst (5) und dem 1. Innendurchmesser (8) der Muffe (6) ein Spalt (9) vorhanden ist und ein 2. Ende der Anschlussmuffe (6) einen 2. Innendurchmesser (7) aufweist, der dem Innendurchmesser (3) der Rohrleitung (2) entspricht und der 1. Innendurchmesser (8) in einem Übergangsbereich zwischen Wulst (5) und Ende der Rohrleitung (2) in den 2. Innendurchmesser (7) übergeht, so dass die Muffe (6) nur so weit auf das Ende der Rohrleitung (2) aufgeschoben ist, bis das Ende (4) der Rohrleitung (2) nicht mehr weiter in den 2. Durchmesser (7) der Muffe (6) hineinpasst,
- eine elastische ringförmige Dichtung (10), die einerseits zwischen dem Ende (4) der Rohrleitung (2) und der Wulst (5), andererseits zwischen der aufgeschobenen Muffe (6) und der Rohrleitung (2) angeordnet ist,
- einen Verbindungsring (13), der in einem Bereich angeordnet ist, der axial derart bemessen ist, dass er das aufgeschobene 1. Ende der Muffe (6) sowohl in Richtung auf das nicht aufgeschobene 2. Ende der Muffe (6) als auch in entgegengesetzte Richtung (12) um ein vorbestimmtes Maß überdeckt und in einem Kunststoffspritzvorgang erzeugt ist, wobei das Material des Verbindungsrings (13) durch den Spritzdruck durch den Spalt (9) bis zu der elastischen Dichtung (10) vorgepresst ist und andererseits das Spritzmaterial in Richtung vom Rohrleitungsende (2) wegweisend hinter der Wulst (5) der Rohrleitung (2) um die Rohrleitung (2) herum gepresst ist, so dass ein nach innen bis zur Rohrleitung (2) reichenden Absatz (15) ausgebildet ist.

2. Kupplungsarmatur (1) nach Anspruch 1, **dadurch gekennzeichnet, dass** Muffe (6) im Bereich des Verbindungsringes (13) mindestens eine umlaufende Nut (11) aufweist, in die das Material des Verbindungsringes (13) eingreift.

3. Kupplungsarmatur (1) nach Anspruch 1 oder 2, **dadurch gekennzeichnet, dass** die Kupplungsarmatur (1) eine Halterung aufweist, die mindestens teilweise im Bereich des Verbindungsringes (13) angeordnet ist, so dass mindestens ein Teil der Halterung in das Material des Verbindungsringes (13) eingebettet ist.

4. Kupplungsarmatur (1) nach Anspruch 3, **dadurch gekennzeichnet, dass** der in den Verbindungsring (13) hineinragende Teil der Halterung mindestens ein durchgehendes Loch aufweist, dass mit dem Material des Verbindungsrings (13) gefüllt ist.

5. Verfahren zur Herstellung einer Kupplungsarmatur (1), aufweisend eine Rohrleitung (2) und eine Anschlussmuffe (6), wobei die Kupplungsarmatur (1) durch folgende Arbeitsschritte hergestellt wird, nämlich
- Erzeugen einer umlaufenden Wulst (5) auf der Rohrleitung (2), wobei die Wulst (5) vom Ende der Rohrleitung (2) um ein vorbestimmtes Maß beabstandet ist,
- Aufschieben einer elastischen ringförmigen Dichtung (10) auf das Ende (4) der Rohrleitung (2) derart, dass die Dichtung (10) zwischen Wulst (5) und Ende (4) der Rohrleitung (2) zu liegen kommt,
- Aufschieben der Anschlussmuffe (6) auf das Ende (4) der Rohrleitung (2) derart, dass deren 1. Ende im Bereich der Wulst (5) der Rohrleitung (2) zu liegen kommt und einen 1. Innendurchmesser (8) aufweist derart, dass zwischen dem äußeren Durchmesser der Wulst (5) und dem 1. Innendurchmesser (8) der Muffe (6) ein Spalt (9) gebildet wird und deren 2. Ende einen 2. Innendurchmesser (7) aufweist, der dem Innendurchmesser (3) der Rohrleitung (2) entspricht und der 1. Innendurchmesser (8) in einem Übergangsbereich zwischen Wulst (5) und Ende (4) der Rohrleitung (2) in den 2. Innendurchmesser (7) übergeht, so dass die Muffe (6) nur soweit auf das Ende (4) der Rohrleitung (2) geschoben werden kann, bis das Ende (4) der Rohrleitung (2) nicht mehr weiter in den 2. Durchmesser (8) der Muffe hineinpasst,
- Umspritzen des Verbundes aus Rohrleitungsende (4, 5) und Muffe (6) zu einem Verbindungsring (13) in einem Bereich, der axial derart bemessen ist, dass der Verbindungsring (13) das aufgeschobene 1. Ende der Muffe (6) sowohl in Richtung auf das nicht aufgeschobene 2. Ende der Muffe (6) als auch in entgegengesetzte Richtung um ein vorbestimmtes Maß überdeckt und in einem Kunststoffspritzvorgang erzeugt wird, wobei das Material des Verbindungsrings (13) durch den Spritzdruck durch den Spalt (9) bis zu der elastischen Dichtung (10) gepresst wird und andererseits das Spritzmaterial in Richtung vom Rohrleitungsende (4) wegweisend hinter der Wulst (5) der Rohrleitung (2) um die Rohrleitung (2) herum gepresst wird, so dass ein nach innen bis zur Rohrleitung (2) reichenden Absatz (15) ausgebildet wird.

6. Verfahren nach Anspruch 5, **dadurch gekennzeichnet, dass** das Verfahren weiters den folgenden Schritt aufweist, nämlich
- Anordnung einer Halterung im Bereich des zu umspritzenden Verbindungsringes (13) derart, dass ein Teil der Haltung in den zu spritzenden Bereich (13) hineinragt und dieses Teil beim Spritzvorgang vom Spritzmaterial umspritzt wird.

7. Verfahren nach Anspruch 6, **dadurch gekennzeichnet, dass** der in den zu spritzenden Bereich (13) hineinragende Teil der Halterung mindestens ein durchgehendes Loch aufweist, in welches das Spritzmaterial beim Spritzvorgang eindringt.

## Claims

1. Coupling fitting (1), having a pipeline (2) and having a connector sleeve (6), wherein the coupling fitting (1) has the following further features:
- a radially outwardly pointing, encircling bead (5) which is spaced apart from the end of the pipeline (2) by a predetermined dimension,
- a first end of the connector sleeve (6) which is pushed onto the pipeline (2) is arranged in the region of the bead (5) of the pipeline (2) and has a first inner diameter (8) such that a gap (9) is present between the outer diameter of the bead (5) and the first inner diameter (8) of the sleeve (6), and a second end of the connector sleeve (6) has a second inner diameter (7) which corresponds to the inner diameter (3) of the pipeline (2), and the first inner diameter (8) transitions into the second inner diameter (7) in a transition region between the bead (5) and the end of the pipeline (2), such that the sleeve (6) is pushed onto the end of the pipeline (2) only as far as a point at which the end (4) of the pipeline (2) fits no further into the second diameter (7) of the sleeve (6),
- an elastic ring-shaped seal (10), which is arranged both between the end (4) of the pipeline (2) and the bead (5) and between the pushed-on sleeve (6) and the pipeline (2),
- a connecting ring (13) which is arranged in a region which is axially dimensioned such that it covers the pushed-on first end of the sleeve (6) both in the direction of the non-pushed-on second end of the sleeve (6) and in the opposite direction (12) by a predetermined dimension and is produced in a plastics injection-molding process, wherein the material of the connecting ring (13) is, owing to the injection pressure, pre-pressed through the gap (9) as far as the elastic seal (10) and, secondly, the injected material is pressed around the pipeline (2) behind the bead (5) of the pipeline (2) in a direction pointing away from the pipeline end (2), such that a shoulder (15) is formed which extends inwardly as far as the pipeline (2).

2. Coupling fitting (1) according to Claim 1, **characterized in that** the sleeve (6) has, in the region of the connecting ring (13), at least one encircling groove (11) into which the material of the connecting ring (13) engages.

3. Coupling fitting (1) according to Claim 1 or 2, **characterized in that** the coupling fitting (1) has a holder which is arranged at least partially in the region of the connecting ring (13), such that at least a part of the holder is embedded into the material of the connecting ring (13).

4. Coupling fitting (1) according to Claim 3, **characterized in that** that part of the holder which projects into the connecting ring (13) has at least one through-hole which is filled with the material of the connecting ring (13).

5. Method for producing a coupling fitting (1), having a pipeline (2) and having a connector sleeve (6), wherein the coupling fitting (1) is produced by means of the following working steps:
- producing an encircling bead (5) on the pipeline (2), wherein the bead (5) is spaced apart from the end of the pipeline (2) by a predetermined dimension,
- pushing an elastic, ring-shaped seal (10) onto the end (4) of the pipeline (2) such that the seal (10) comes to lie between the bead (5) and the end (4) of the pipeline (2),
- pushing the connector sleeve (6) onto the end (4) of the pipeline (2) such that the first end of said connector sleeve comes to lie in the region of the bead (5) of the pipeline (2) and has a first inner diameter (8) such that a gap (9) is formed between the outer diameter of the bead (5) and the first inner diameter (8) of the sleeve (6), and the second end of which connector sleeve has a second inner diameter (7) which corresponds to the inner diameter (3) of the pipeline (2), and the first inner diameter (8) transitions into the second inner diameter (7) in a transition region between the bead (5) and the end (4) of the pipeline (2), such that the sleeve (6) can be pushed onto the end (4) of the pipeline (2) only as far as a point at which the end (4) of the pipeline (2) fits no further into the second diameter (8) of the sleeve,
- encapsulating the assembly composed of pipeline end (4, 5) and sleeve (6) to form a connecting ring (13) in a region which is axially dimensioned such that the connecting ring (13) covers the pushed-on first end of the sleeve (6) both in the direction of the non-pushed-on second end of the sleeve (6) and in the opposite direction by a predetermined dimension and is produced in a plastics injection-molding process, wherein the material of the connecting ring (13) is, owing to the injection pressure, pressed through the gap (9) as far as the elastic seal (10) and, secondly, the injected material is pressed around the pipeline (2) behind the bead (5) of the pipeline (2) in a direction pointing away from the pipeline end (4), such that a shoulder (15) is formed which extends inwardly as far as the pipeline (2).

6. Method according to Claim 5, **characterized in that** the method furthermore has the following step:
- arranging a holder in the region of the connecting ring (13) to be encapsulated, in such a way that a part of the holder projects into the region (13) in which injection molding is to be performed, and said part is encapsulated by the injection-molded material during the injection molding process.

7. Method according to Claim 6, **characterized in that** that part of the holder which projects into the region (13) in which injection molding is to be performed has at least one through-hole into which the injection-molded material ingresses during the injection molding process.

## Revendications

1. Armature de raccordement (1), présentant une conduite (2) et un manchon de raccordement (6), dans laquelle l'armature de raccordement (1) présente les caractéristiques supplémentaires suivantes, à savoir
- un bourrelet périphérique (5) saillant radialement vers l'extérieur et espacé d'une distance prédéterminée de l'extrémité de la conduite (2),
- une première extrémité du manchon de raccordement (6) enfilé sur la conduite (2) est disposée dans la région du bourrelet (5) et présente un premier diamètre intérieur (8), de telle manière qu'il existe une fente (9) entre le diamètre extérieur du bourrelet (5) et le premier diamètre intérieur (8) du manchon (6) et une deuxième extrémité du manchon de raccordement (6) présente un deuxième diamètre intérieur (7), qui correspond au diamètre intérieur (3) de la conduite (2) et le premier diamètre intérieur (8) devient dans une région de transition entre le bourrelet (5) et l'extrémité de la conduite (2) le deuxième diamètre intérieur (7), de telle manière que le manchon (6) ne soit enfilé sur l'extrémité de la conduite (2) que jusqu'à ce que l'extrémité (4) de la conduite (2) ne puisse plus s'ajuster plus loin dans le deuxième diamètre (7) du manchon (6),
- un joint d'étanchéité annulaire élastique (10), qui est disposé d'une part entre l'extrémité (4) de la conduite (2) et le bourrelet (5) et d'autre part entre le manchon enfilé (6) et la conduite (2),
- une bague d'assemblage (13), qui est disposée dans une région qui est axialement dimensionnée de telle manière qu'elle recouvre d'une longueur prédéterminée la première extrémité enfilée du manchon (6) aussi bien en direction de la deuxième extrémité non enfilée du manchon (6) que dans la direction opposée (12) et qui a été produite par un procédé d'injection de matière plastique, dans lequel la matière de la bague d'assemblage (13) est pré-refoulée par la pression d'injection à travers la fente (9) jusqu'au joint d'étanchéité élastique (10) et d'autre part la matière injectée en direction s'éloignant de l'extrémité de la conduite (2) est refoulée autour de la conduite (2) derrière le bourrelet (5) de la conduite (2), de telle manière qu'il se forme un épaulement (15) s'étendant vers l'intérieur jusqu'à la conduite (2).

2. Armature de raccordement (1) selon la revendication 1, **caractérisée en ce que** le manchon (6) présente dans la région de la bague d'assemblage (13) au moins une rainure périphérique (11), dans laquelle s'engage la matière de la bague d'assemblage (13).

3. Armature de raccordement (1) selon une revendication 1 ou 2, **caractérisée en ce que** l'armature de raccordement (1) présente un support, qui est disposé au moins en partie dans la région de la bague d'assemblage (13), de telle manière qu'au moins une partie du support soit noyée dans la matière de la bague d'assemblage (13).

4. Armature (1) selon la revendication 3, **caractérisée en ce que** la partie du support pénétrant dans la bague d'assemblage (13) présente au moins un trou traversant, qui est rempli avec la matière de la bague d'assemblage (13).

5. Procédé de fabrication d'une armature de raccordement (1), présentant une conduite (2) et un manchon de raccordement (6), dans lequel on fabrique l'armature de raccordement (1) par les opérations suivantes, à savoir
- produire un bourrelet périphérique (5) sur la conduite (2), dans lequel le bourrelet (5) est espacé d'une distance prédéterminée de l'extrémité de la conduite (2),
- enfiler un joint d'étanchéité annulaire élastique (10) sur l'extrémité (4) de la conduite (2), de telle manière que le joint d'étanchéité (10) vienne se placer entre le bourrelet (5) et l'extrémité (4) de la conduite (2),
- enfiler le manchon de raccordement (6) sur l'extrémité (4) de la conduite (2), de telle manière que sa première extrémité vienne se placer dans la région du bourrelet (5) de la conduite (2) et présente un premier diamètre intérieur (8), de telle manière qu'une fente (9) soit formée entre le diamètre extérieur du bourrelet (5) et le premier diamètre intérieur (8) du manchon (6) et dont la deuxième extrémité présente un deuxième diamètre intérieur (7), qui correspond au diamètre intérieur (3) de la conduite (2) et le premier diamètre (8) devient le deuxième diamètre intérieur (7) dans une région de transition entre le bourrelet (5) et l'extrémité (4) de la conduite (2), de telle manière que le manchon (6) ne puisse s'engager sur l'extrémité (4) de la conduite (2) que jusqu'à ce que l'extrémité (4) de la conduite (2) ne puisse plus s'ajuster plus loin dans le deuxième diamètre (8) du manchon (6),
- enrober l'ensemble composé de l'extrémité de conduite (4, 5) et du manchon (6) en une bague d'assemblage (13) dans une région, qui est axialement dimensionnée de telle manière que la bague d'assemblage (13) recouvre sur une longueur prédéterminée la première extrémité enfilée du manchon (6) aussi bien en direction de la deuxième extrémité non enfilée du manchon (6) que dans la direction opposée et qui est produite par un procédé d'injection de matière plastique, dans lequel on refoule la matière de la bague d'assemblage (13) par la pression d'injection à travers la fente (9) jusqu'au joint d'étanchéité élastique (10) et d'autre part on refoule la matière d'injection autour de la conduite (2) dans une direction s'éloignant de l'extrémité de conduite (4) derrière le bourrelet (5) de la conduite (2), de telle manière qu'il se forme un épaulement (15) s'étendant vers l'intérieur jusqu'à la conduite (2).

6. Procédé selon la revendication 5, **caractérisé en ce que** le procédé présente en outre l'étape suivante, à savoir
- disposer un support dans la région de la bague d'assemblage (13) à enrober, de telle manière qu'une partie du support pénètre dans la région à injecter (13) et que cette partie soit enrobée par la matière d'injection lors de l'opération d'injection.

7. Procédé selon la revendication 6, **caractérisé en ce que** la partie du support pénétrant dans la région à injecter (13) présente au moins un trou traversant, dans lequel la matière d'injection pénètre lors de l'opération d'injection.
